# EUROPÄISCHE PATENTSCHRIFT

(11) **EP 4 297 988 B1**
(45) Veröffentlichungstag und Bekanntmachung des Hinweises auf die Patenterteilung: **08.04.2026**
(21) Anmeldenummer: 22709220.2
(22) Anmeldetag: 09.02.2022
(51) Int. Cl.: B60K 15/035, B60K 15/04

(54) **TANKEINFÜLLSTUTZEN MIT FLÜSSIGKEITSABSCHEIDER**
TANK FILLER NECK COMPRISING A LIQUID SEPARATOR (II)
COL DE REMPLISSAGE DE RÉSERVOIR COMPRENANT UN SÉPARATEUR DE LIQUIDE (II)

(30) Priorität: 26.02.2021 DE 102021201825
(43) Veröffentlichungstag der Anmeldung: 03.01.2024
(73) Patentinhaber: VOLKSWAGEN AKTIENGESELLSCHAFT, 38440 Wolfsburg (DE)
(72) Erfinder: BERLIN, Ralf, 39638 OT Wiepke / Gardelegen (DE); DIESTELHORST, Axel, 38446 Wolfsburg (DE)
(86) Internationale Anmeldenummer: PCT/EP2022/053102
(87) Internationale Veröffentlichungsnummer: WO 2022/179851

(56) Entgegenhaltungen:
- EP-A1- 3 738 811
- US-A- 4 630 749
- US-A1- 2016 325 619

## Beschreibung

Die Erfindung betrifft gemäß dem Oberbegriff des Patentanspruchs 1 einen Tankeinfüllstutzen, der einen Flüssigkeitsabscheider aufweist und am oberen Ende eines zu einem Kraftstoffbehälter führenden Einfüllrohrs anordenbar ist.

Ein Kraftstofftank (auch als Kraftfahrzeugtank bezeichnet) dient der Bevorratung von Kraftstoff, wie insbesondere Ottokraftstoff (Benzin) oder Dieselkraftstoff, in einem Kraftfahrzeug. Ein solcher Kraftstofftank ist typischerweise aufgebaut aus einem Kraftstoffbehälter (auch als Tankblase bezeichnet), ein an seinem unteren Ende in den Kraftstoffbehälter mündendes Einfüllrohr, über das beim Betanken der Kraftstoff in den Kraftstoffbehälter fließt, und einen am oberen Ende des Einfüllrohrs angeordneten Tankeinfüllstutzen mit einer Einführöffnung für ein Zapfventil, welches typischerweise als Zapfpistole ausgebildet ist. Ein solcher Kraftstofftank ist beispielsweise aus den Patentschriften DE 198 02 078 B4 und US 6,006,799 A bekannt.

Die Patentschrift DE 10 2015 010 354 B4 (siehe auch US 10,245,942 B2) beschreibt eine Betriebsmitteltankanordnung mit einem Tankeinfüllstutzen, der für die vorliegende Erfindung als nächstliegender Stand der Technik angesehen wird. Im oberen Ende des Einfüllrohrs ist ein Führungseinsatz zur Führung einer Zapfeinrichtung (Zapfventil) angeordnet. Der Führungseinsatz weist eine schwenkbewegliche Verschlussklappe auf, die beim Einbringen der Zapfeinrichtung elastisch ausgelenkt wird. Ferner ist ein Flüssigkeitsabscheider vorgesehen. Dieser dient dem Abscheiden von flüssigem Betriebsmittel aus einem Gemisch aus Luft, gasförmigem Betriebsmittel und flüssigem Betriebsmittel. Der Flüssigkeitsabscheider weist ein becherförmig beziehungsweise topfförmig ausgestaltetes Abscheidergehäuse auf, das am Einfüllrohr befestigt ist. Das Abscheidergehäuse weist einen Abscheideraum auf, welcher einerseits über eine Entlüftungsleitung an den Betriebsmitteltank angeschlossen ist. Andererseits ist der Abscheideraum mit einer Filtereinrichtung strömungsverbunden. Weiterhin steht der Flüssigkeitsabscheider beziehungsweise der Abscheideraum in Strömungsverbindung mit dem Einfüllrohr, sodass abgeschiedenes flüssiges Betriebsmittel durch das Einfüllrohr in Richtung des Betriebsmitteltanks fließen kann. Der Flüssigkeitsabscheider ist als Labyrinthabscheider ausgebildet.

Aus der Patentschrift WO 2014/030160 A1 ist ein Flüssigkeitsabscheider bekannt (siehe Figuren 5 bis 11), der an einem Einfüllrohr befestigt ist und eine Absperrvorrichtung mit einem schwenkbeweglichen Sperrelement) aufweist. Beim Einführen eines Zapfventils (Zapfpistole) in das Einfüllrohr wird das Sperrelement in eine geschlossene Position verschwenkt, um dadurch zu verhindern, dass während des Betankungsvorgangs flüssiger Kraftstoff oder Kraftstoffdampf (Luft-Kraftstoff-Gemisch) in den Flüssigkeitsabscheider gelangen.

Die den nächstliegenden Stand der Technik bildende EP 3 738 811 A1 beschreibt eine Entlüftungsvorrichtung zur Entlüftung eines Kraftfahrzeugtanks mit einem im oberen Ende des Einfüllrohrs eingebauten Flüssigkeitsabscheider für die Betriebsentlüftung des Kraftfahrzeugtanks. Ferner ist am Entgasungsabgang eine axial verschiebbare Klappe angeordnet, die beim Einführen einer Zapfpistole den Entgasungsabgang verkleinert oder schließt.

Zum Stand der Technik wird ferner hingewiesen auf die Patentschriften DE 196 05 922 B4, DE 20 2008 001 586 U1 (siehe auch EP 1 955 888 B1), US 2016/0325619 A1 und US 4,630,749 A.

Der erfindungsgemäße Tankeinfüllstutzen des Patentanspruchs 1 ermöglicht einen kompakten und äußerst effektiven Aufbau des Flüssigkeitsabscheiders sowie eine optimale Entlastung der Filtereinrichtung während eines Betankungsvorgangs. Vorteilhafte Weiterbildungen des erfindungsgemäßen Tankeinfüllstutzens und zusätzliche Merkmale ergeben sich aus den abhängigen Patentansprüchen, der nachfolgenden Erfindungsbeschreibung (wobei dies ausdrücklich auch Merkmale einschließt, die als "beispielsweise", "bevorzugt", "insbesondere" etc. beschrieben sind) und den Figuren.

Der erfindungsgemäße Tankeinfüllstutzen ist am oberen Ende eines zu einem Kraftstoffbehälter führenden Einfüllrohrs anordenbar und umfasst einen am oberen Ende des Einfüllrohrs befestigbaren Flüssigkeitsabscheider. Der Flüssigkeitsabscheider weist einen in Strömungsverbindung, insbesondere in direkter Strömungsverbindung, mit dem Einfüllrohr bringbaren Abscheideraum auf (zum Abscheiden von flüssigem Kraftstoff beziehungsweise Kraftstofftröpfchen aus einem Luft-Kraftstoff-Gemisch), d. h., der Abscheideraum ist zur Abführung von abgeschiedenem Kraftstoff strömungstechnisch an das Einfüllrohr anschliessbar.

An diesen Abscheideraum ist auch eine Entlüftungsleitung des Kraftstoffbehälters (strömungstechnisch) anschliessbar, oder anders gesagt, der Abscheideraum ist über eine Entlüftungsleitung an den Kraftstoffbehälter anschließbar. Der Flüssigkeitsabscheider weist ferner einen in Strömungsverbindung, insbesondere in direkter Strömungsverbindung, mit dem Einfüllrohr bringbaren Auslassraum auf, an den, bevorzugt über eine Verbindungsleitung oder dergleichen, eine Filtereinrichtung, insbesondere eine Aktivkohlefiltereinrichtung, (strömungstechnisch) anschließbar ist. Über diesen Auslassraum kann das von flüssigem Kraftstoff beziehungsweise von Kraftstofftröpfchen befreite Luft-Kraftstoff-Gemisch in Richtung der Filtereinrichtung abgeführt werden.

Der erfindungsgemäße Tankeinfüllstutzen umfasst bevorzugt auch einen im oberen Ende des Einfüllrohrs angeordneten Führungseinsatz oder dergleichen zur Aufnahme eines Zapfventils.

Erfindungsgemäß ist ein schwenkbeweglich gelagerter Verschlussdeckel vorgesehen, mit dem beim Einführen eines Zapfventils in das Einfüllrohr ein Auslassbereich des Auslassraums verschlossen wird beziehungsweise verschließbar ist und dadurch die Strömungsverbindung zur Filtereinrichtung unterbrochen wird beziehungsweise unterbrechbar ist. Bevorzugt ist dieser schwenkbewegliche Verschlussdeckel in den Flüssigkeitsabscheider integriert beziehungsweise ist Bestandteil des Flüssigkeitsabscheiders.

Beim erfindungsgemäßen Tankeinfüllstutzen wird beim Einführen des Zapfventils in das Einfüllrohr beziehungsweise in die Einführöffnung am oberen Ende des Einfüllrohrs ein schwenkbeweglicher Verschlussdeckel, der auch als schwenkbewegliches Sperrelement bezeichnet werden kann, betätigt beziehungsweise verschwenkt, sodass der Auslassbereich des Auslassraums automatisch verschlossen beziehungsweise versperrt wird und die Strömungsverbindung zwischen Auslassraum beziehungsweise Auslassbereich und Filtereinrichtung absolut unterbrochen ist. Somit können beim Betanken keine Betankungsgase aber auch keine Entlüftungsgase der Kraftstoffbehälterentlüftung zur Filtereinrichtung gelangen, wodurch die Filtereinrichtung entlastet wird. Dies geschieht insbesondere ohne Beeinträchtigung der Abscheidung im Abscheideraum (die quasi einfach weiterläuft). Beim Herausziehen des Zapfventils wird der Auslassbereich des Auslassraums wieder automatisch geöffnet und die Strömungsverbindung zur Filtereinrichtung freigegeben. Bevorzugt ist ein Federelement oder dergleichen vorhanden, welches den Verschlussdeckel in seine geöffnete Stellung vorspannt. Mittels des schwenkbeweglichen Verschlussdeckels wird also eine die Filtereinrichtung entlastende Schaltfunktion realisiert.

Bevorzugt ist der Verschlussdeckel im Auslassraum beziehungsweise innerhalb des Auslassraums angeordnet, wodurch eine optimale Bauraumausnutzung ohne zusätzlichen Platzbedarf gelingt.

Der schwenkbewegliche Verschlussdeckel kann beim Einführen des Zapfventils direkt durch dieses betätigt werden, wie nachfolgend noch näher erläutert. Bevorzugt ist jedoch vorgesehen, dass der Verschlussdeckel mit einer schwenkbeweglich gelagerten Verschlussklappe für die Einführöffnung des Zapfventils bewegungsgekoppelt ist, sodass beim Einführen des Zapfventils eine mittelbare Betätigung durch die Verschlussklappe erfolgt, wie nachfolgend noch näher erläutert. Bevorzugt sind dann auch Federelemente oder dergleichen vorhanden, welche den Verschlussdeckel beziehungsweise das Sperrelement in eine geöffnete Stellung und die Verschlussklappe in eine geschlossene Stellung vorspannen. Dadurch wird beim Herausziehen des Zapfventils automatisch der Auslassbereich wieder geöffnet und die Einführöffnung wieder verschlossen.

Erfindungsgemäß weist der Flüssigkeitsabscheider ein am Einfüllrohr befestigbares, insbesondere nach oben gerichtetes, Abscheidergehäuse auf, welches ein becherförmiges beziehungsweise napfartiges Außengehäuse mit einem (oberen) Boden und mit einer im Wesentlichen zylindrischen Außenmantelwand (Außenwandung) sowie ein konzentrisch im Außengehäuse angeordnetes Innengehäuse mit einer im Wesentlichen zylindrischen Innenmantelwand (Innenwandung) umfasst. Der von der Innenmantelwand umschlossene zylindrische Innenraum bildet den Auslassraum und der kreisringzylindrische Außenraum zwischen der Innenmantelwand und der Außenmantelwand bildet einen kreisringzylindrischen Abscheideraum. Der Flüssigkeitsabscheider weist also einen zylindrischen Auslassraum auf, der in radialer Richtung von einem kreisringzylindrischen Abscheideraum umgeben ist. Dies führt zu einem sehr kompakten und äußerst effektiven Aufbau des Flüssigkeitsabscheiders. Unter einem kreisringzylindrischen Abscheideraum wird ein zylindrischer Hohlraum mit kreisringförmiger Grundfläche verstanden, der sich entlang einer Zylinderachse beziehungsweise Mittelachse erstreckt. Bevorzugt weisen der zylindrische Auslassraum und der kreisringzylindrische Abscheideraum im Wesentlichen eine vertikale Ausrichtung auf, womit gemeint ist, dass die Zylinderachse zumindest näherungsweise vertikal verläuft (beispielsweise in einem Bereich von 0° bis 10° zur Vertikalen).

Bevorzugt ist vorgesehen, dass der kreisringzylindrische Abscheideraum (der sich zwischen der Außenmantelwand und der Innenmantelwand erstreckt; s. o.) einen seitlichen außermittigen Anschluss für die Entlüftungsleitung aufweist, der sich insbesondere an der zylindrischen Außenmantelwand des Abscheidergehäuses befindet, sodass sich im kreisringzylindrischen Abscheideraum eine Wirbelströmung ausbilden kann beziehungsweise eine solche Wirbelströmung erzeugbar ist. Unter einem seitlichen Anschluss wird bevorzugt verstanden, dass die Entlüftungsleitung nicht stirnseitig oder bodenseitig beziehungsweise axial, sondern seitlich angeschlossen ist beziehungsweise seitlich in den kreisringzylindrischen Abscheideraum einmündet, insbesondere an einer zylindrischen Mantelwand (beispielsweise der Außenmantelwand des Abscheidergehäuses; s. o.). Unter einem seitlichen außermittigen Anschluss wird bevorzugt verstanden, dass die Anschlussachse des seitlichen Anschlusses bezüglich der Zylinderachse des kreisringzylindrischen Abscheideraums versetzt ist. Der seitliche außermittige Anschluss der Entlüftungsleitung führt dazu, dass das aus der Entlüftungsleitung austretende Luft-Kraftstoff-Gemisch nicht radial, sondern tangentenartig (tangential) beziehungsweise sekantenartig in den kreisringzylindrischen Abscheideraum einströmt und sich dadurch im kreisringzylindrischen Abscheideraum eine Wirbelströmung ausbildet beziehungsweise eine Wirbelströmung erzeugt wird.

Unter einer Wirbelströmung wird eine Rotationsströmung im kreisringzylindrischen Abscheideraum verstanden, wobei das aus der Entlüftungsleitung einströmende Luft-Kraftstoff-Gemisch in einer bestimmten Rotationsrichtung den kreisringzylindrischen Abscheideraum vollumfänglich durchströmt beziehungsweise im kreisringzylindrischen Abscheideraum zirkuliert. Aufgrund von Zentrifugalkräften wird der im Luft-Kraftstoff-Gemisch enthaltene flüssige Kraftstoff an der Innenumfangsfläche einer zylindrischen Mantelwand, insbesondere der Außenmantelwand, des Abscheideraums abgeschieden und kann dann in das Einfüllrohr abfließen beziehungsweise abtropfen. Dadurch wird einerseits eine äußerst effektive Abscheidung realisiert (die auch hohen Anforderungen an die Abscheidungsgüte gerecht wird) und andererseits ein kompakter beziehungsweise kleinbauender Aufbau des Flüssigkeitsabscheiders ermöglicht. Der Vorgang des Abscheidens kann im Übrigen auch als "Ausperlen" (drop formation) bezeichnet werden.

Der mit dem schwenkbeweglichen Verschlussdeckel verschließbare Auslassbereich befindet sich bevorzugt in einem oberen Abschnitt beziehungsweise Bereich des Auslassraums, insbesondere bezogen auf eine vertikale Ausrichtung (s. o.). In diesem Bereich ist bevorzugt auch ein bodenseitiger (d. h. am Boden des Abscheidergehäuses angeordneter) Anschluss für die Filtereinrichtung (an den die Filtereinrichtung strömungstechnisch angeschlossen beziehungsweise anschließbar ist) vorhanden. Mit anderen Worten: Der Auslassraum des Flüssigkeitsabscheiders kann einen den bodenseitigen Anschluss (für die Filtereinrichtung) umfassenden beziehungsweise zum bodenseitigen Anschluss führenden Auslassbereich aufweisen, wobei es sich quasi um eine Auslasskammer des Auslassraums handelt, die sich insbesondere in einem oberen beziehungsweise bodennahen Bereich des Auslassraums befindet und mittels des schwenkbeweglichen Verschlussdeckels verschließbar ist.

Im Auslassraum kann ein Roll-Over-Ventil angeordnet sein, welches bei einem Überschlag des Kraftfahrzeugs den Anschluss zur Filtereinrichtung verschließt beziehungsweise versperrt und ein Auslaufen des Kraftstoffs zur Filtereinrichtung verhindert. Die Anordnung des Roll-Over-Ventils im Auslassraum (des Abscheidergehäuses) gelingt ohne zusätzlichen Platzbedarf. Bevorzugt ist das Roll-Over-Ventil im Auslassbereich des Auslassraums angeordnet.

Die vorausgehend und/oder nachfolgend beschriebenen sowie gegebenenfalls in den Figuren gezeigten Komponenten, insbesondere der Tankeinfüllstutzen, der Kraftstoffbehälter, das Einfüllrohr, der Flüssigkeitsabscheider, die Entlüftungsleitung, die Filtereinrichtung und/oder der Führungseinsatz, können im Rahmen der hierin beschriebenen Kombinationen eine sogenannte Tankanordnung für ein Kraftfahrzeug beziehungsweise eine Kraftfahrzeug-Tankanordnung bilden.

Nachfolgend werden besonders bevorzugte Ausführungsbeispiele der Erfindung mit Bezug auf die Figuren näher erläutert. Die in den Figuren gezeigten und/oder nachfolgend erläuterten Merkmale können, auch unabhängig von konkreten Merkmalskombinationen, allgemeine Merkmale der Erfindung sein und die Erfindung entsprechend weiterbilden.
- Fig. 1: zeigt einen erfindungsgemäßen Tankeinfüllstutzen und ein eingeführtes Zapfventil.
- Fig. 2: zeigt in einer Schnittdarstellung (gemäß dem in Fig. 1 angegebenen Schnittverlauf A-A) ein erstes Ausführungsbeispiel des Tankeinfüllstutzens ohne Zapfventil.
- Fig. 3: zeigt das erste Ausführungsbeispiel der Fig. 2 mit eingeführtem Zapfventil.
- Fig. 4: zeigt in einer Schnittdarstellung analog zur Fig. 3 ein zweites Ausführungsbeispiel des Tankeinfüllstutzens mit eingeführtem Zapfventil.

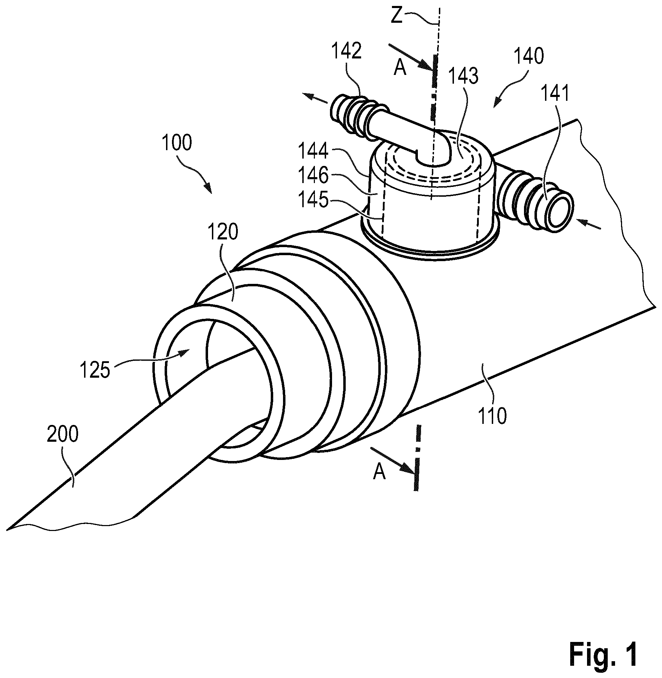

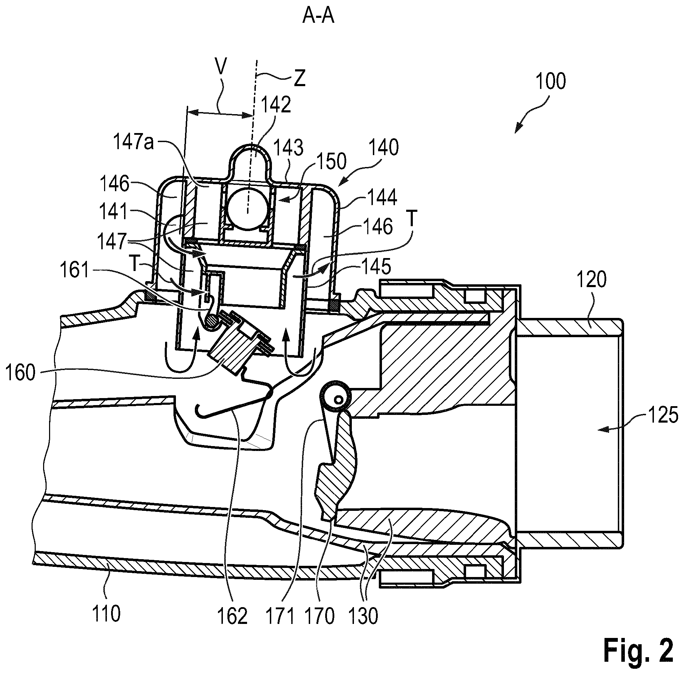

Der in Fig. 1 gezeigte Einfüllstutzen 100 ist am oberen Ende eines Einfüllrohrs 110 angeordnet, welches zu einem Kraftstoffbehälter führt. Am Einfüllrohr 110 ist eine insbesondere als Gewindering ausgebildete Aufsatzmanschette 120 befestigt, die eine Einführöffnung 125 für ein nur teilweise dargestelltes Zapfventil (Zapfpistole) 200 umrandet. Im Einfüllrohr 110 ist ein mehrteiliger Führungseinsatz 130 (siehe Fig. 2) zur Aufnahme und Führung des Zapfventils 200 angeordnet. Am Einfüllrohr 110 ist ferner ein Flüssigkeitsabscheider 140 befestigt. Der Flüssigkeitsabscheider 140 weist zwei als Anschlussnippel beziehungsweise Anschlussstutzen ausgebildete Anschlüsse 141 und 142 auf, die als Einlass und Auslass fungieren (siehe Pfeile in Fig. 1). Am seitlichen Anschluss 141 des Flüssigkeitsabscheiders 140 ist eine Entlüftungsleitung des Kraftstoffbehälters (sogenannte Kraftstoffbehälterentlüftung beziehungsweise Tankentlüftung) angeschlossen. Am oberen bodenseitigen Anschluss 142 ist mittels Verbindungsleitung oder dergleichen eine bevorzugt extern angeordnete Filtereinrichtung, insbesondere eine Aktivkohlefiltereinrichtung, angeschlossen. Der Führungseinsatz 130 und das Abscheidergehäuse des Flüssigkeitsabscheiders 140 sind bevorzugt aus Kunststoff gefertigt, wobei es sich insbesondere um Kunststoffspritzgussteile handelt. Die Aufsatzmanschette 120 ist bevorzugt aus Metall gebildet, zwecks Ableitung von elektrostatischen Aufladungen.

Wie aus allen Figuren ersichtlich, umfasst das am Einfüllrohr 110 mit im Wesentlichen vertikaler Ausrichtung (siehe Mittelachse Z) befestigte Abscheidergehäuse des Flüssigkeitsabscheiders 140 ein becherförmiges Außengehäuse mit einem Boden 143 und einer zylindrischen Außenmantelwand 144 sowie ein konzentrisch im Außengehäuse angeordnetes Innengehäuse mit einer zylindrischen Innenmantelwand 145. Die Innenmantelwand 145 ist in axialer Richtung Z länger als die Außenmantelwand 144 ausgebildet und ragt (nach unten) in das Einfüllrohr 110 hinein.

Zwischen der Außenmantelwand 144 und der Innenmantelwand 145 erstreckt sich ein als Ringraum ausgebildeter kreisringzylindrischer Abscheideraum 146. Dieser kreisringzylindrische Abscheideraum 146 ist ein erster Teilraum der zugleich als Einlassraum für das aus der Entlüftungsleitung durch den seitlichen Anschluss 141 einströmende Luft-Kraftstoff-Gemisch fungiert. In diesem Abscheideraum 146 werden flüssiger Kraftstoff beziehungsweise Kraftstofftröpfchen aus dem einströmenden Luft-Kraftstoff-Gemisch abgeschieden, wie nachfolgend noch näher erläutert. Das Innengehäuse bildet einen von der Innenmantelwand 145 seitlich umschlossenen, im Wesentlichen zylindrischen zweiten Teilraum (Innenraum) 147, der als Auslassraum fungiert und über den bodenseitigen Anschluss 142 an die Filtereinrichtung angeschlossen ist. Der zweite Teilraum beziehungsweise Auslassraum 147 ist in radialer Richtung quasi vom ersten Teilraum (Außenraum) beziehungsweise Abscheideraum 146 umgeben. Der Auslassraum 147 weist einen oberen Auslassbereich beziehungsweise eine obere Auslasskammer 147a auf, der sich direkt unterhalb des Anschlusses beziehungsweise Auslasses 142 befindet. In diesem Auslassbereich 147a ist ein Roll-Over-Ventil 150 angeordnet. Sowohl der kreisringzylindrische Abscheideraum 146 als auch die Auslasskammer 147 sind nach unten, d. h. bezüglich ihrer axialen Ausrichtung Z an ihren unteren Enden, offen und stehen somit in direkter Strömungsverbindung mit dem Einfüllrohr 110.

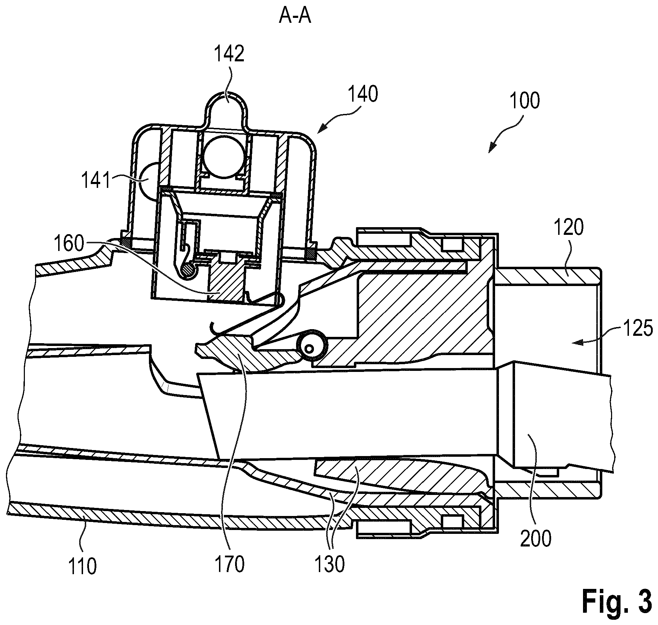

Wie aus den Figuren 2 bis 4 ersichtlich, ist im Auslassraum 147 des Flüssigkeitsabscheiders 140 ein schwenkbeweglich gelagerter Verschlussdeckel beziehungsweise ein schwenkbewegliches Sperrelement 160 angeordnet, mit dem der darüberliegende Auslassbereich 147a verschlossen beziehungsweise versperrt werden kann. Der Verschlussdeckel 160 kann Dichtringe oder dergleichen aufweisen. Bei dem in Fig. 2 und Fig. 3 gezeigten ersten Ausführungsbeispiel ist dieser Verschlussdeckel 160 mit einer am Führungseinsatz 130 schwenkbeweglich gelagerten Verschlussklappe 170 für die Einführöffnung 125 des Zapfventils 200 bewegungsgekoppelt, derart, dass der Auslassbereich beziehungsweise die Auslasskammer 147a beim Einführen des Zapfventils 200 automatisch verschlossen wird, wie in Fig. 3 gezeigt. Der Verschlussdeckel 160 weist hierzu einen Bügel beziehungsweise Hebel 162 oder dergleichen für die mittelbare Betätigung durch die Verschlussklappe 170 auf. Ferner sind Federelemente 161, 171 vorgesehen, die einen Federmechanismus bilden, der den Verschlussdeckel 160 in die geöffnete Stellung und die Verschlussklappe 170 in die geschlossene Stellung vorspannt (wie in Fig. 2 gezeigt), sodass beim Herausziehen des Zapfventils 200 der Verschlussdeckel 160 öffnet und die Verschlussklappe 170 schließt.

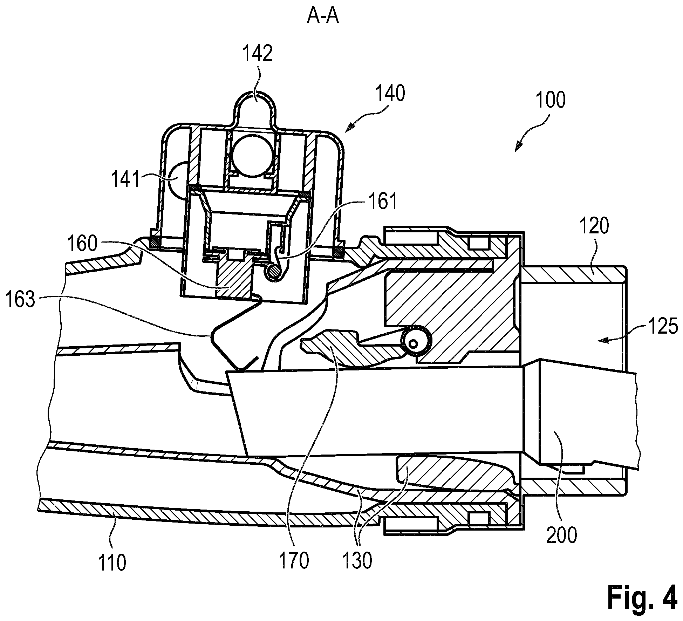

Bei dem in Fig. 4 gezeigten zweiten Ausführungsbeispiel wird der schwenkbeweglich gelagerte Verschlussdeckel 160 beim Einführen des Zapfventils 200 automatisch verschlossen, indem das Zapfventil 200 gegen einen Bügel beziehungsweise Hebel 163 oder dergleichen des Verschlussdeckels 160 drückt. Die Betätigung des Verschlussdeckels 160 erfolgt hier quasi direkt durch das Zapfventil 200. Der Verschlussdeckel 160 wird durch das Federelement 161 in die geöffnete Stellung vorgespannt, sodass der Auslassbereich 147a beim Herausziehen des Zapfventils 200 wieder geöffnet wird.

Durch den Verschlussdeckel 160 ist der Tankeinfüllstutzen 100 mit einer Schaltfunktion ausgestattet, um sowohl eine Betriebsentlüftung als auch eine Betankungsentlüftung zu realisieren. Im Betriebszustand (siehe Fig. 2) ist der Verschlussdeckel 160 geöffnet. Die Betriebsentlüftung des Kraftstoffbehälters erfolgt über den Flüssigkeitsabscheider 140 zur Filtereinrichtung, wie nachfolgend noch näher erläutert. Im Betankungszustand (siehe Fig. 3 und Fig. 4) ist der Verschlussdeckel 160 geschlossen, wodurch der Weg zur Filtereinrichtung absolut beziehungsweise total versperrt und dadurch auch die Strömungsverbindung zwischen dem Einfüllrohr 110 und der Filtereinrichtung unterbrochen ist. Trotz dieser unterbrochenen Strömungsverbindung zur Filtereinrichtung kann ungehindert das Luft-Kraftstoff-Gemisch aus der Kraftstoffbehälterentlüftung im kreisringzylindrischen Abscheideraum 146 von flüssigen Kraftstoffanteilen befreit werden, wie untenstehend erläutert. Zur Betankungsentlüftung beim Betankungsvorgang können die (von flüssigen Kraftstoffanteilen befreiten) Entlüftungsgase der Kraftstoffbehälterentlüftung und die außerdem beim Betankungsvorgang freigesetzten Gase (Betankungsgase) durch die Einführöffnung 125 in die Atmosphäre entweichen oder werden insbesondere über das Zapfventil 200 abgesaugt (sogenanntes Gaspendelverfahren). Während eines Betankungsvorgangs ist die Filtereinrichtung also weder Betankungsgasen noch Entlüftungsgasen ausgesetzt und wird somit entlastet.

Wie in der Fig. 2 veranschaulicht, strömt das mit flüssigem Kraftstoff beziehungsweise mit Kraftstofftröpfchen durchsetzte Luft-Kraftstoff-Gemisch aus der Kraftstoffbehälterentlüftung durch den seitlichen Anschluss beziehungsweise Einlass 141 in den kreisringzylindrischen Abscheideraum 146 ein und kann darin vollumfänglich zirkulieren. Der Anschluss 141 ist außermittig angeordnet, d. h., die Anschlussachse ist bezüglich der vertikalen Zylinderachse beziehungsweise Mittelachse Z versetzt (siehe Pfeil V in Fig. 2). Dadurch wird im kreisringzylindrischen Abscheideraum 146 eine Wirbelströmung T erzeugt. Aufgrund von Zentrifugalkräften wird der im Luft-Kraftstoff-Gemisch enthaltene flüssige Kraftstoff im Wesentlichen an der Innenumfangsfläche der Außenmantelwand 144 abgeschieden und kann dann nach unten in das Einfüllrohr 110 abfließen beziehungsweise abtropfen, insbesondere auch bei geschlossenem Verschlussdeckel 160. Beim Eintritt des Luft-Kraftstoff-Gemischs in den viel größeren Raum des Einfüllrohres 110 verringert sich dessen Strömungsgeschwindigkeit, was die weitere Abscheidung (drop out) noch verbliebener flüssiger Kraftstoffanteile begünstigt, die als Tröpfchen nach unten (in das Einfüllrohr 110) abtropfen. Das auf diese Weise von flüssigen Kraftstoffanteilen befreite und somit im Wesentlichen nur Gasanteile enthaltende Luft-Kraftstoff-Gemisch kann dann von unten in den Auslassraum 147 einströmen (siehe Strömungspfeile) und am Roll-Over-Ventil 150 vorbei durch den Anschluss beziehungsweise Auslass 142 zur Filtereinrichtung abströmen.

Der Flüssigkeitsabscheider 140 bildet zusammen mit dem Roll-Over-Ventil 150 sowie gegebenenfalls dem Verschlussdeckel 160 (insbesondere einschließlich des Federelements 161) eine kompakte vorfertigbare Baueinheit (einschließlich des Abscheidergehäuses), die in einfacher Weise am entsprechend vorbereiteten Einfüllrohr 110 befestigbar ist. Die Befestigung erfolgt bevorzugt durch Klipselemente, Verklebung oder Verschweißung.

### Bezugszeichenliste

- 100: Tankeinfüllstutzen
- 110: Einfüllrohr
- 120: Manschette
- 125: Einführöffnung
- 130: Führungseinsatz
- 140: Flüssigkeitsabscheider
- 141: Anschluss (Einlass)
- 142: Anschluss (Auslass)
- 143: Boden
- 144: Außenmantelwand
- 145: Innenmantelwand
- 146: Abscheideraum (Einlassraum)
- 147: Auslassraum
- 147a: Auslassbereich (Auslasskammer)
- 150: Roll-Over-Ventil
- 160: Verschlussdeckel (Sperrelement)
- 161: Federelement
- 162: Bügel (Hebel)
- 163: Bügel (Hebel)
- 170: Verschlussklappe
- 171: Federelement
- 200: Zapfventil
- T: Wirbelströmung
- V: Versatz
- Z: Zylinderachse, Mittelachse

## Patentansprüche

1. Tankeinfüllstutzen (100), der am oberen Ende eines zu einem Kraftstoffbehälter führenden Einfüllrohrs (110) anordenbar ist, mit einem am oberen Ende des Einfüllrohrs (110) befestigbares Flüssigkeitsabscheider (140), welcher
- einen in Strömungsverbindung mit dem Einfüllrohr (110) bringbaren kreisringzylindrischen Abscheideraum (146), an den eine Entlüftungsleitung des Kraftstoffbehälters anschliessbar ist, und
- einen in Strömungsverbindung mit dem Einfüllrohr (110) bringbaren Auslassraum (147), an den eine Filtereinrichtung anschliessbar ist, aufweist,
**dadurch gekennzeichnet, dass**
der Flüssigkeitsabscheider (140) ein am Einfüllrohr (110) befestigbares Abscheidergehäuse aufweist, das ein becherförmiges Außengehäuse mit einem Boden (143) und einer zylindrischen Außenmantelwand (144) sowie ein konzentrisch im Außengehäuse angeordnetes Innengehäuse mit einer zylindrischen Innenmantelwand (145) umfasst, wobei der von der Innenmantelwand (145) umschlossene zylindrische Innenraum den Auslassraum (147) bildet und der Außenraum zwischen der Innenmantelwand (145) und der Außenmantelwand (144) den kreisringzylindrischen Abscheideraum (146) bildet,
wobei ferner ein schwenkbeweglich gelagerter Verschlussdeckel (160) vorgesehen ist, mit dem beim Einführen eines Zapfventils (200) in das Einfüllrohr (110) ein Auslassbereich (147a) des Auslassraums (147) verschlossen und dadurch die Strömungsverbindung zur Filtereinrichtung unterbrochen wird.

2. Tankeinfüllstutzen (100) nach Anspruch 1,
**dadurch gekennzeichnet, dass**
der Verschlussdeckel (160) innerhalb des Auslassraums (147) angeordnet ist.

3. Tankeinfüllstutzen (100) nach Anspruch 1 oder 2,
**dadurch gekennzeichnet, dass**
der Verschlussdeckel (160) mit einer schwenkbeweglich gelagerten Verschlussklappe (170) für die Einführöffnung (125) des Zapfventils (200) bewegungsgekoppelt ist.

4. Tankeinfüllstutzen (100) nach Anspruch 3,
**dadurch gekennzeichnet, dass**
Federelemente (161, 171) vorhanden sind, welche den Verschlussdeckel (160) in eine geöffnete Stellung und die Verschlussklappe (170) in eine geschlossene Stellung vorspannen.

5. Tankeinfüllstutzen (100) nach einem der vorhergehenden Ansprüche,
**dadurch gekennzeichnet, dass**
der kreisringzylindrische Abscheideraum (146) einen seitlichen außermittigen Anschluss (141) für die Entlüftungsleitung aufweist, sodass sich im kreisringzylindrischen Abscheideraum (146) eine Wirbelströmung (T) ausbilden kann.

6. Tankeinfüllstutzen (100) nach einem der vorhergehenden Ansprüche,
**dadurch gekennzeichnet, dass**
die Zylinderachse (Z) des zylindrischen Auslassraums (147) und des kreisringzylindrischen Abscheideraums (146) eine vertikale Ausrichtung (Z) aufweist.

7. Tankeinfüllstutzen (100) nach einem der vorhergehenden Ansprüche,
**dadurch gekennzeichnet, dass**
sich der Auslassbereich (147a) in einem oberen Abschnitt des Auslassraums (147), in dem auch ein bodenseitiger Anschluss (142) für die Filtereinrichtung vorhanden ist, befindet.

8. Tankeinfüllstutzen (100) nach einem der vorhergehenden Ansprüche,
**dadurch gekennzeichnet, dass**
im Auslassbereich (147a) ein Roll-Over-Ventil (150) angeordnet ist.

9. Tankeinfüllstutzen (100) nach Anspruch 8,
**dadurch gekennzeichnet, dass**
der Flüssigkeitsabscheider (140) zusammen mit dem Roll-Over-Ventil (150) und dem Verschlussdeckel (160) eine Baueinheit bildet.

## Claims

1. Fuel-tank filler neck (100) which can be arranged at the upper end of a filler hose (110) leading to a fuel tank and which comprises a liquid separator (140) that can be fastened to the upper end of the filler hose (110) and that has
- an annular cylindrical separation chamber (146) which can be brought into flow connection with the filler hose (110) and to which a vent line of the fuel tank can be connected, and
- an outlet chamber (147) which can be brought into flow connection with the filler hose (110) and to which a filter device can be connected,
**characterized in that**
the liquid separator (140) has a separator housing that can be fastened to the filler hose (110), which housing comprises a cup-shaped outer housing having a bottom (143) and a cylindrical outer lateral wall (144), and an inner housing arranged concentrically in the outer housing and having a cylindrical inner lateral wall (145), the cylindrical inner chamber enclosed by the inner lateral wall (145) forming the outlet chamber (147) and the outer chamber between the inner lateral wall (145) and the outer lateral wall (144) forming the annular cylindrical separation chamber (146),
a pivotably mounted closure cover (160) further being provided, by means of which, when a fuel nozzle (200) is inserted into the filler hose (110), an outlet region (147a) of the outlet chamber (147) is closed and the flow connection to the filter device is thereby interrupted.

2. Fuel-tank filler neck (100) according to claim 1,
**characterized in that**
the closure cover (160) is arranged within the outlet chamber (147).

3. Fuel-tank filler neck (100) according to claim 1 or 2,
**characterized in that**
the closure cover (160) is motion-coupled to a pivotably mounted closure flap (170) for the insertion opening (125) of the fuel nozzle (200).

4. Fuel-tank filler neck (100) according to claim 3,
**characterized in that**
spring elements (161, 171) are provided which preload the closure cover (160) into an open position and the closure flap (170) into a closed position.

5. Fuel-tank filler neck (100) according to any of the preceding claims,
**characterized in that**
the annular cylindrical separation chamber (146) has a lateral, off-center connection (141) for the vent line, with the result that a vortex flow (T) can form in the annular cylindrical separation chamber (146).

6. Fuel-tank filler neck (100) according to any of the preceding claims,
**characterized in that**
the cylinder axis (Z) of the cylindrical outlet chamber (147) and of the annular cylindrical separation chamber (146) has a vertical orientation (Z).

7. Fuel-tank filler neck (100) according to any of the preceding claims,
**characterized in that**
the outlet region (147a) is located in an upper portion of the outlet chamber (147), in which portion a bottom-side connection (142) for the filter device is also present.

8. Fuel-tank filler neck (100) according to any of the preceding claims,
**characterized in that**
a roll-over valve (150) is arranged in the outlet region (147a).

9. Fuel-tank filler neck (100) according to claim 8,
**characterized in that**
the liquid separator (140) together with the roll-over valve (150) and the closure cover (160) forms a structural unit.

## Revendications

1. Tubulure de remplissage de réservoir (100) qui peut être disposée à l'extrémité supérieure d'un tube de remplissage (110) menant à un réservoir de carburant, comportant un séparateur de liquide (140) pouvant être fixé à l'extrémité supérieure du tube de remplissage (110), lequel séparateur de liquide présente
- un espace de séparation (146) en forme de cylindre annulaire pouvant être amené en liaison par écoulement avec le tube de remplissage (110) et auquel peut être raccordée une conduite d'aération du réservoir de carburant, et
- un espace de sortie (147) pouvant être amené en liaison par écoulement avec le tube de remplissage (110) et auquel peut être raccordé un dispositif de filtrage,
**caractérisée en ce que**
le séparateur de liquide (140) présente un boîtier de séparateur pouvant être fixé au tube de remplissage (110) et comprenant un boîtier extérieur en forme de godet comportant un fond (143) et une paroi d'enveloppe extérieure (144) cylindrique ainsi qu'un boîtier intérieur disposé de manière concentrique dans le boîtier extérieur et comportant une paroi d'enveloppe intérieure (145) cylindrique, dans laquelle l'espace intérieur cylindrique entouré par la paroi d'enveloppe intérieure (145) forme l'espace de sortie (147) et l'espace extérieur entre la paroi d'enveloppe intérieure (145) et la paroi d'enveloppe extérieure (144) forme l'espace de séparation (146) en forme de cylindre annulaire,
dans laquelle un moyen de recouvrement de fermeture (160) monté de manière à pouvoir pivoter est en outre prévu, avec lequel, lors de l'introduction d'un pistolet de distribution (200) dans le tube de remplissage (110), une zone de sortie (147a) de l'espace de sortie (147) est fermée et la liaison par écoulement vers le dispositif de filtrage est ainsi interrompue.

2. Tubulure de remplissage de réservoir (100) selon la revendication 1,
**caractérisée en ce que**
le moyen de recouvrement de fermeture (160) est disposé à l'intérieur de l'espace de sortie (147).

3. Tubulure de remplissage de réservoir (100) selon la revendication 1 ou 2,
**caractérisée en ce que**
le moyen de recouvrement de fermeture (160) est accouplé en déplacement à un clapet de fermeture (170) monté de manière à pouvoir pivoter pour l'ouverture d'introduction (125) du pistolet de distribution (200).

4. Tubulure de remplissage de réservoir (100) selon la revendication 3,
**caractérisée en ce que**
des éléments formant ressorts (161, 171) sont présents, lesquels précontraignent le moyen de recouvrement de fermeture (160) dans une position ouverte et le clapet de fermeture (170) dans une position fermée.

5. Tubulure de remplissage de réservoir (100) selon l'une des revendications précédentes,
**caractérisée en ce que**
l'espace de séparation (146) en forme de cylindre annulaire présente un raccord (141) latéral excentré pour la conduite d'aération, de sorte qu'un écoulement tourbillonnaire (T) peut se former dans l'espace de séparation (146) en forme de cylindre annulaire.

6. Tubulure de remplissage de réservoir (100) selon l'une des revendications précédentes,
**caractérisée en ce que**
l'axe de cylindre (Z) de l'espace de sortie (147) cylindrique et de l'espace de séparation (146) en forme de cylindre annulaire présente une orientation verticale (Z).

7. Tubulure de remplissage de réservoir (100) selon l'une des revendications précédentes,
**caractérisée en ce que**
la zone de sortie (147a) est située dans une section supérieure de l'espace de sortie (147), dans laquelle est également présent un raccord côté fond (142) pour le dispositif de filtrage.

8. Tubulure de remplissage de réservoir (100) selon l'une des revendications précédentes,
**caractérisée en ce que**
une soupape de retournement (150) est disposée dans la zone de sortie (147a).

9. Tubulure de remplissage de réservoir (100) selon la revendication 8,
**caractérisée en ce que**
le séparateur de liquide (140) forme conjointement avec la soupape de retournement (150) et le moyen de recouvrement de fermeture (160) une unité structurale.
